# EUROPÄISCHE PATENTSCHRIFT

(11) **EP 3 673 180 B1**
(45) Veröffentlichungstag und Bekanntmachung des Hinweises auf die Patenterteilung: **14.09.2022**
(21) Anmeldenummer: 18758853.8
(22) Anmeldetag: 16.08.2018
(51) Int. Cl.: F16B 37/04, F16B 21/06, F16B 33/02

(54) **BEFESTIGUNGSEINHEIT**
FIXING UNIT
UNITÉ DE FIXATION

(30) Priorität: 21.08.2017 DE 102017119010
(43) Veröffentlichungstag der Anmeldung: 01.07.2020
(73) Patentinhaber: Amazonen-Werke H. Dreyer SE & Co. KG, 49205 Hasbergen (DE)
(72) Erfinder: KLEINE-HARTLAGE, Hubertus, 49186 Bad Iburg (DE); KRABBE, Ulrich, 49205 Hasbergen (DE); HOFTER, Rainer, 49143 Bissendorf (DE)
(86) Internationale Anmeldenummer: PCT/EP2018/072170
(87) Internationale Veröffentlichungsnummer: WO 2019/038163

(56) Entgegenhaltungen:
- EP-A1- 1 281 876
- DE-A1- 19 944 685
- DE-A1-102006 007 244
- US-A1- 2013 078 052
- US-B2- 8 297 169

## Beschreibung

Die Erfindung betrifft eine Befestigungseinheit zur Bereitstellung eines als Innengewinde ausgebildeten Montagegewindes an einem Bauteil, insbesondere an einem dünnwandigen Bauteil, nach dem Oberbegriff des Patentanspruchs 1 und eine Baugruppe nach dem Oberbegriff des Patentanspruchs 17.

In einer Vielzahl von Anwendungsbereichen ist es notwendig, zwei unterschiedliche Bauteile miteinander zu verbinden oder aneinander zu befestigen. Dabei besteht häufig das Problem, dass an keinem der Bauteile ohne Weiteres ein Montagegewinde eingebracht werden kann.

Insbesondere bei dünnwandigen Bauteilen ist die Materialstärke regelmäßig nicht ausreichend, um ein belastbares Montagegewinde direkt an dem Bauteil bereitstellen zu können. Zusätzlich zu der Dünnwandigkeit von Bauteilen existiert eine Vielzahl von weiteren Hindernisgründen, welche das Einbringen von Montagegewinden an Bauteilen verbietet. Die Einbringung von Montagegewinden in Bauteile kann beispielsweise die Beschichtung des jeweiligen Bauteils beschädigen. Ferner kann eine beschränkte Zugänglichkeit eines Bauteilabschnitts dazu führen, dass eine direkte Einbringung eines Montagegewindes gar nicht oder nur mit einem sehr hohen Aufwand möglich ist.

Zur Bereitstellung eines Montagegewindes ist es aus dem Stand der Technik bekannt, entsprechende Bauteile mit Ausnehmungen zu versehen und in die Ausnehmungen Nietmuttern einzutreiben. Die Druckschrift EP 2 684 437 A1 schlägt eine entsprechende Befestigungsmethode für Bauteile einer landwirtschaftlichen Verteilmaschine vor. Das Eintreiben von Nietmuttern führt jedoch regelmäßig zu einer Beschädigung der Bauteilbeschichtung, sodass die Korrosionsanfälligkeit des Bauteils gesteigert und die Lebensdauer verringert wird.

Außerdem ist es bekannt, Unterlegscheiben mit einer lackschonenden Beschichtung zu verwenden, um eine Beschädigung der Bauteilbeschichtung während des Montageprozesses zu verhindern. Eine entsprechende Unterlegscheibe ist beispielsweise aus der Druckschrift EP 2 647 852 A2 bekannt. Die bekannten Lösungen zur Bereitstellung eines Montagewindes an einem Bauteil bedingen ein hohes Risiko einer Bauteilbeschädigung oder setzen zeit- und kostenaufwendige Montagevorgänge voraus.

Weitere derartige Befestigungseinheiten sind aus DE 10 2006 007244 A1, DE 199 44 685 A1, EP 1 281 876 A1 bekannt, wobei das Halteelement jeweils mehrere als Rasthaken ausgebildete Verbindungsteile umfasst. Diese Rasthaken dienen der dazu den Befestigungskörper auf der ersten Seite des Bauteils zu halten und sind dazu vorgesehen mit einem korrespondierenden Halteabschnitt des Befestigungskörpers verbunden zu werden. Der Halteabschnitt ist jeweils von dem Montagegewinde beabstandet. US 8 297 169 B2 offenbart eine bekannte Befestigungseinheit.

Die der Erfindung zugrunde liegende Aufgabe besteht somit darin, die Bereitstellung eines Montagegewindes an einem Bauteil zu ermöglichen, ohne dass dies zu einer Bauteilbeschädigung führt und/oder zeit- oder kostenaufwendige Montagevorgänge voraussetzt.

Die Aufgabe wird gelöst durch eine Befestigungseinheit der eingangs genannten Art, wobei die Befestigungseinheit die Merkmale des unabhängigen Anspruchs 1 aufweist.

Die Erfindung macht sich die Erkenntnis zunutze, dass durch eine zumindest zweiteilige Befestigungseinheit, welche einen das Montagegewinde tragenden Befestigungskörper und ein zum Halten des Befestigungskörpers ausgebildetes Halteelement umfasst, die Notwendigkeit überwunden wird, den Befestigungskörper nach Art einer Nietmutter in das Bauteil einzutreiben. Die Befestigungseinheit kann somit, anders als eine Nietmutter, ohne wesentliche Materialbeanspruchung an dem Bauteil befestigt werden. Dabei stellt die Befestigungseinheit in gleicher Weise wie eine Nietmutter ein Montagegewinde an dem Bauteil bereit, welches dazu genutzt werden kann, ein weiteres Bauteil an dem Bauteil, an welchem das Montagegewinde bereitgestellt wurde, zu befestigen. Die Bereitstellung eines Montagegewindes an dem Bauteil erfolgt somit ohne oder mit einem wesentlich geringeren Risiko, eine Beschichtung, wie beispielsweise eine Lackierung, des Bauteils zu beschädigen. Einer beschleunigten Alterung und einem erhöhten Risiko eines Bauteilversagens durch Korrosion wird somit effektiv vorgebeugt. Darüber hinaus erlaubt die erfindungsgemäße Befestigungseinheit eine Ein-Mann-Montage, sodass der Montageaufwand erheblich reduziert wird.

In einer besonders bevorzugten Ausführungsform der erfindungsgemäßen Befestigungseinheit ist das eine oder sind die mehreren Verbindungsteile des Halteelements dazu eingerichtet, reversibel lösbar und vorzugsweise zerstörungsfrei und/oder werkzeuglos mit dem Halteabschnitt des Befestigungskörpers verbunden zu werden. Durch die reversible Lösbarkeit der Verbindung zwischen dem einen oder den mehreren Verbindungsteilen des Halteelements und dem Halteabschnitt des Befestigungskörpers kann die Befestigungseinheit von dem Bauteil gelöst werden. Somit ist beispielsweise ein Austausch der Befestigungseinheit möglich, ohne dass das Bauteil während des Austauschs beschädigt wird. Insbesondere im Falle einer Beschädigung der Befestigungseinheit wird somit vermieden, dass das gesamte Bauteil, mit welchem die Befestigungseinheit verbunden ist, ausgetauscht werden muss.

Darüber hinaus ist eine erfindungsgemäße Befestigungseinheit bevorzugt, bei welcher das eine oder die mehreren Verbindungsteile des Halteelements dazu eingerichtet sind, zumindest formschlüssig mit dem Halteabschnitt des Befestigungskörpers verbunden zu werden. Alternativ oder zusätzlich ist das eine oder sind die mehreren Verbindungsteile des Halteelements dazu eingerichtet, kraftschlüssig mit dem Halteabschnitt des Befestigungskörpers verbunden zu werden. Die kraftschlüssige Verbindung kann dabei beispielsweise eine Klemmverbindung sein.

In einer anderen Ausführungsform der erfindungsgemäßen Befestigungseinheit umfasst das eine oder umfassen die mehreren Verbindungsteile einen oder mehrere elastisch verformbare Stege, welche zum Halten des Befestigungskörpers auf der ersten Seite des Bauteils dazu eingerichtet sind, unter elastischer Verformung mit dem von dem Montagegewinde beabstandeten Halteabschnitt des Befestigungskörpers verbunden zu werden. Vorzugsweise ist der eine oder sind die mehreren elastisch verformbaren Stege dazu eingerichtet, beim Einsetzen des Halteelements in den Befestigungskörper durch In-Kontakt-Kommen mit dem Befestigungskörper elastisch verformt zu werden. Vorzugsweise wird der Formschluss zwischen dem einen oder den mehreren elastisch verformbaren Stegen und dem Halteabschnitt des Befestigungskörpers dadurch erreicht, dass der eine oder die mehreren elastisch verformten Stege jeweils durch eine Rückstellkraft eine Formschlussposition einnehmen.

Darüber hinaus ist eine erfindungsgemäße Befestigungseinheit bevorzugt, bei welcher der Halteabschnitt des Befestigungskörpers eine oder mehrere Rastkanten aufweist und der eine oder die mehreren Stege jeweils als Rasthaken ausgebildet sind, wobei die eine oder die mehreren Rastkanten und der eine oder die mehreren Rasthaken zum Halten des Befestigungskörpers auf der ersten Seite des Bauteils dazu eingerichtet sind, miteinander verrastet zu werden. Durch die eine oder die mehreren Rastkanten und den einen oder die mehreren als Rasthaken ausgebildeten Stege können der Befestigungskörper und das Halteelement nach Art einer Clip-Verbindung miteinander verbunden werden. Nach dem Verrasten des einen oder der mehreren Rastkanten und der einen oder der mehreren Rasthaken kann die Befestigungseinheit entweder bereits vollständig montiert sein oder sich in einem Zwischenzustand befinden, in welchem die Befestigungseinheit noch nicht vollständig montiert ist. In dem Zwischenzustand kann die Befestigungseinheit beispielsweise Spiel aufweisen, welches eine Relativbewegung der Befestigungseinheit gegenüber dem Bauteil erlaubt.

In einer weiteren bevorzugten Ausführungsform der erfindungsgemäßen Befestigungseinheit weist der Halteabschnitt des Befestigungskörpers ein als Innengewinde ausgebildetes Fixiergewinde auf und die eine oder die mehreren Rastkanten sind Bestandteil des Fixiergewindes. Vorzugsweise ist die eine oder sind die mehreren Rastkanten durch die Flanken des Gewindeganges des Fixiergewindes ausgebildet. Insbesondere ist der eine oder sind die mehreren Rasthaken dazu eingerichtet, in dem Gewindegang des Fixiergewindes verrastet zu werden. Durch die Verwendung des Fixiergewindes zum Verrasten des einen oder der mehreren Rasthaken ergeben sich mehrere Einrastpositionen des Halteelements in dem Befestigungskörper.

Außerdem ist eine erfindungsgemäße Befestigungseinheit bevorzugt, bei welcher der eine oder die mehreren Stege jeweils einen Kontaktbereich aufweisen, welcher einen Abschnitt eines mit dem Fixiergewinde korrespondierenden Außengewindes trägt. Durch das Außengewinde im Kontaktbereich des einen oder der mehreren Stege kann das Halteelement nach dem Verrastungsvorgang, welcher durch die elastische Verformbarkeit der Stege ermöglicht wird, weiter eingedreht werden, sodass ein Kontaktabschnitt des Halteelements in Kontakt mit einer Kontaktfläche des Bauteils kommt, welche auf der zweiten Seite des Bauteils angeordnet ist. Ein etwaig vorhandenes Spiel zwischen dem Befestigungskörper und dem Halteelement nach dem Einsetzen des Halteelements in den Befestigungskörper kann durch ein zusätzliches Eindrehen des Halteelements in den Befestigungskörper eliminiert werden. Auf diese Weise kann gewährleistet werden, dass das Halteelement unabhängig von der Ausbildung des Fixiergewindes bis zu einer Endposition in den Befestigungskörper eingesetzt werden kann, wobei das Halteelement in der Endposition an dem Bauteil anschlägt.

Erfindungsgemäß ist ein Verbindungsteil des Halteelements als umlaufendes und als Außengewinde ausgebildetes Verbindungsgewinde ausgebildet, wobei der Halteabschnitt des Befestigungskörpers ein zu dem Verbindungsgewinde korrespondierendes als Innengewinde ausgebildetes Fixiergewinde aufweist. Anders als bei der Ausbildung der Verbindungsteile als elastisch verformbare Stege wird das Halteelement in diesem Fall nicht axial in den Befestigungskörper eingesetzt, sondern mittels einer Rotationsbewegung in den Befestigungskörper eingedreht.

Auf diese Weise kann die Stabilität und Präzision der Verbindung zwischen dem Befestigungskörper und dem Halteelement weiter gesteigert werden.

In einer weiteren vorteilhaften Weiterbildung der erfindungsgemäßen Befestigungseinheit weisen das Montagegewinde und das Fixiergewinde unterschiedliche Durchmesser auf. Vorzugsweise weist das Fixiergewinde einen größeren Durchmesser als das Montagegewinde auf. In diesem Fall kann das eine oder können die mehreren Verbindungsteile mit dem Fixiergewinde in Eingriff gebracht werden, ohne dass das eine oder die mehreren Verbindungsteile in einen Bereich hineinragen, in welchen ein in das Montagegewinde einzudrehendes Befestigungselement, wie etwa eine Schraube, einzusetzen ist.

Ferner ist eine erfindungsgemäße Befestigungseinheit bevorzugt, bei welcher der Befestigungskörper eine Verdrehsicherung aufweist, welche dazu eingerichtet ist, sich zumindest abschnittsweise durch die Ausnehmung in dem Bauteil zu erstrecken und durch Formschluss ein Verdrehen des Befestigungskörpers um eine Längsachse des Befestigungskörpers zu verhindern. Vorzugsweise weist die Ausnehmung des Bauteils eine Innenkontur mit einer oder mehreren Ecken oder Kanten auf, wobei die Verdrehsicherung als Materialvorsprung ausgebildet ist, deren Form oder Querschnitt ein verdrehsicheres Einsetzen in die Ausnehmung des Bauteils erlaubt. Vorzugsweise weisen die Ausnehmung des Bauteils und/oder die Verdrehsicherung einen rechteckigen oder quadratischen Querschnitt auf.

Darüber hinaus ist eine erfindungsgemäße Befestigungseinheit vorteilhaft, bei welcher der Befestigungskörper eine Kontaktfläche aufweist, welche dazu eingerichtet ist, mit einer auf der ersten Seite des Bauteils angeordneten Kontaktfläche des Bauteils in Kontakt zu stehen. Die Kontaktfläche des Befestigungskörpers dient in diesem Fall als Anschlag, mit welchem der Befestigungskörper gegenüber dem Bauteil zumindest in einer Richtung positioniert werden kann.

In einer anderen bevorzugten Ausführungsform der erfindungsgemäßen Befestigungseinheit weist das Halteelement einen Kontaktabschnitt auf, welcher dazu eingerichtet ist, als Unterlegscheibe und/oder Abstandshalter zwischen dem Bauteil und einem weiteren unter Verwendung der Befestigungseinheit an dem Bauteil zu befestigenden weiteren Bauteil zu dienen. Vorzugsweise weist der Kontaktabschnitt des Halteelements eine umlaufende ringförmige Außenfläche auf. Über den Kontaktabschnitt des Halteelements kann verhindert werden, dass die zwei miteinander zu befestigenden Bauteile miteinander in Berührung kommen. Ferner kann durch die Materialstärke des Kontaktabschnitts der Abstand zwischen den aneinander zu befestigenden Bauteilen präzise eingestellt werden.

Außerdem ist eine erfindungsgemäße Befestigungseinheit bevorzugt, bei welcher der Kontaktabschnitt des Halteelements eine erste Kontaktfläche, welche dazu eingerichtet ist, mit einer auf der zweiten Seite des Bauteils angeordneten Kontaktfläche des Bauteils in Kontakt zu stehen, und/oder eine zweite Kontaktfläche, welche dazu eingerichtet ist, mit einer Kontaktfläche des unter Verwendung der Befestigungseinheit an dem Bauteil zu befestigenden weiteren Bauteils in Kontakt zu stehen, aufweist. Vorzugsweise verlaufen die erste Kontaktfläche und die zweite Kontaktfläche im Wesentlichen parallel und/oder weisen eine übereinstimmende Grundform auf. Vorzugsweise weist der Kontaktabschnitt des Halteelements einen Querschnitt auf, welcher den Querschnitt der Ausnehmung des Bauteils abschnittsweise oder allseitig überragt.

In einer erfindungsgemäßen Weiterbildung der Befestigungseinheit ist der Kontaktabschnitt rund und/oder scheibenförmig ausgebildet und/oder weist eine oder mehrere Ausnehmungen auf. Vorzugsweise stimmt die Anzahl der Ausnehmungen des Kontaktabschnitts des Halteelements mit der Anzahl der elastisch verformbaren Stege des Halteelements überein.

Ferner ist eine erfindungsgemäße Befestigungseinheit bevorzugt, bei welcher der Befestigungskörper und/oder das Halteelement jeweils einstückig ausgebildet sind. Durch die einstückige Ausbildung des Befestigungskörpers und/oder des Halteelements ist die Befestigungseinheit besonders robust gegen äußere Einflüsse, wobei die Einstückigkeit des Befestigungskörpers und/oder des Halteelements ebenfalls einen wesentlichen Einfluss auf die Festigkeit der Verbindung zwischen dem Befestigungskörper und dem Halteelement haben kann.

In einer weiteren vorteilhaften Weiterbildung der erfindungsgemäßen Befestigungseinheit sind der Befestigungskörper und/oder das Halteelement jeweils teilweise oder vollständig aus Kunststoff, insbesondere aus einem faserverstärkten Kunststoff ausgebildet. Vorzugsweise sind die Fasern derart orientiert, dass diese ein Gewebe, Gelege, Gestick oder Geflecht ausbilden. Alternativ können die Fasern auch in radialer Richtung, in axialer Richtung und/oder in Umfangsrichtung ausgerichtet sein. Alternativ oder zusätzlich können der Befestigungskörper und/oder das Halteelement auch jeweils teilweise oder vollständig aus Metall oder einer Metalllegierung ausgebildet sein.

Die der Erfindung zugrunde liegende Aufgabe wird ferner durch eine Baugruppe der eingangs genannten Art gelöst, wobei die Befestigungseinheit nach einer der vorstehend beschriebenen Ausführungsformen ausgebildet ist. Hinsichtlich der Vorteile und Modifikationen der erfindungsgemäßen Baugruppe wird zunächst auf die Vorteile und Modifikationen der erfindungsgemäßen Befestigungseinheit verwiesen.

In einer besonders bevorzugten Ausführungsform der erfindungsgemäßen Baugruppe ist das Befestigungselement dazu eingerichtet, bereits vor dem Eindrehen und/oder während des Eindrehens in das Montagegewinde ein Lösen des einen oder der mehreren Verbindungsteile von dem Halteabschnitt des Befestigungskörpers zu verhindern. Vorzugsweise ist das Befestigungselement als Schraube ausgebildet. Die Flanken des Außengewindes der Schrauben liegen dabei bereits vor dem Eindrehen und/oder während des Eindrehens der Schraube in das Montagegewinde an dem einen oder den mehreren Verbindungsteilen des Halteelements an, sodass eine elastische Verformung, welche ein Lösen des einen oder der mehreren Verbindungsteile von dem Halteabschnitt des Befestigungskörpers erlauben würde, durch das Befestigungselement verhindert wird, da das Befestigungselement den für die elastische Verformung des einen oder der mehreren Verbindungsteile notwendigen Raum einnimmt.

Weitere Einzelheiten der Erfindung sind der Figurenbeschreibung und den Zeichnungen zu entnehmen. Es zeigen
- Fig. 1: ein landwirtschaftliches Verteilgerät, bei welchem die erfindungsgemäße Baugruppe verbaut ist;
- Fig. 2: das in der Fig. 1 dargestellte landwirtschaftliche Verteilgerät in einer Draufsicht;
- Fig. 3: einen die erfindungsgemäße Baugruppe beinhaltenden Ausschnitt des in der Fig. 1 dargestellten landwirtschaftlichen Verteilgeräts;
- Fig. 4: ein Ausführungsbeispiel der erfindungsgemäßen Befestigungseinheit in einer perspektivischen Darstellung;
- Fig. 5: einen Befestigungskörper einer erfindungsgemäßen Befestigungseinheit in einer perspektivischen Darstellung;
- Fig. 6: den in der Fig. 5 dargestellten Befestigungskörper in einer Seitenansicht;
- Fig. 7: den in der Fig. 5 dargestellten Befestigungskörper in einer Schnittdarstellung;
- Fig. 8: ein Halteelement einer erfindungsgemäßen Befestigungseinheit in einer perspektivischen Darstellung;
- Fig. 9: das in der Fig. 8 dargestellte Halteelement in einer Seitenansicht;
- Fig. 10: das in der Fig. 8 dargestellte Halteelement in einer Schnittdarstellung;
- Fig. 11: ein Ausführungsbeispiel der erfindungsgemäßen Baugruppe in einer Schnittdarstellung;
- Fig. 12: ein weiteres Ausführungsbeispiel der erfindungsgemäßen Baugruppe in einer Schnittdarstellung; und
- Fig. 13: ein weiteres Ausführungsbeispiel der erfindungsgemäßen Baugruppe in einer Schnittdarstellung.

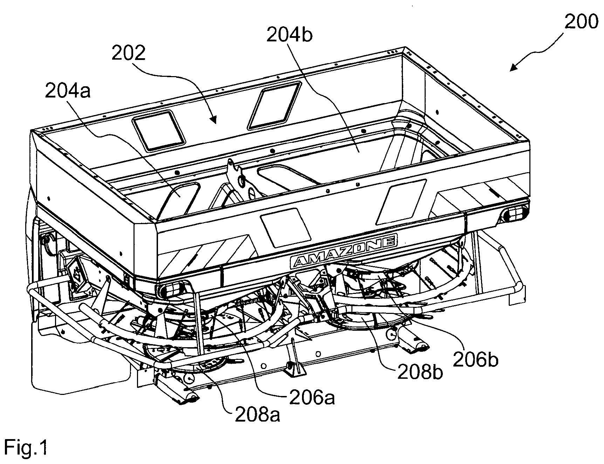

Die Fig. 1 zeigt ein als Düngerstreuer ausgebildetes landwirtschaftliches Verteilgerät 200. Das Verteilgerät 200 umfasst einen Vorratsbehälter 202 zur Bevorratung von Streugut, nämlich Dünger. Der Vorratsbehälter 202 weist zwei Vorratsbereiche 204a, 204b auf, wobei der erste Vorratsbereich 204a mit dem Dosierorgan 206a und der zweite Vorratsbereich 204b mit dem Dosierorgan 206b verbunden ist. Die Dosierorgane 206a, 206b des landwirtschaftlichen Verteilgeräts 200 sind dazu eingerichtet, jeweils eine dosierte Menge an Streugut auf die unterhalb der Dosierorgane 206a, 206b angeordneten Schleuderscheiben 208a, 208b aufzugeben.

Der Vorratsbehälter 202 ist in den Vorratsbereichen 204a, 204b jeweils aus einem dünnwandigen tiefgezogenen Blech ausgebildet. Die Bleche sind an einem ebenfalls dünnwandigen Tragrahmen befestigt. Ferner weisen die Bleche und der Tragrahmen eine Beschichtung auf, welche die Bauteile vor Korrosion schützen.

Aufgrund der Dünnwandigkeit der Bleche und des Tragrahmens und deren Beschichtung ist es nicht möglich ein belastbares Montagegewinde direkt in eines der Bauteile einzubringen. Das Eintreiben von Nietmutter verbietet sich aufgrund des Risikos, die Beschichtung zu beschädigen.

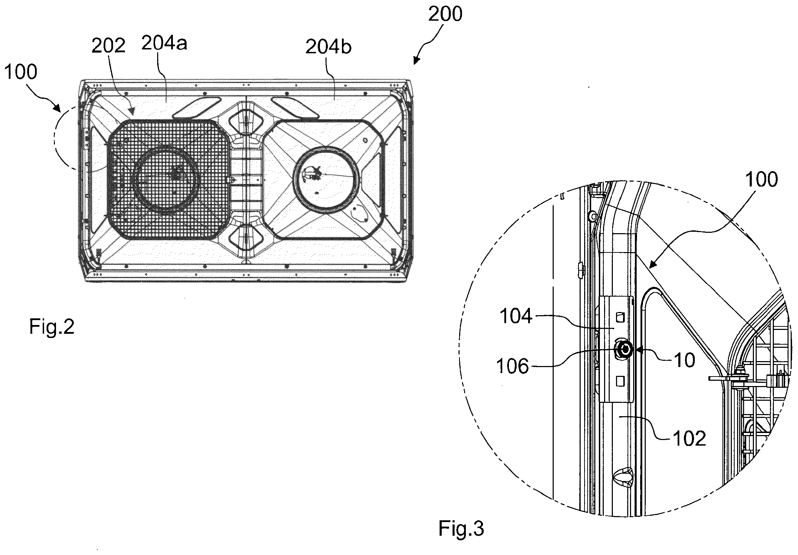

Die Fig. 2 und die Fig. 3 zeigen, dass das Blech als ein erstes Bauteil 102 und der Tragrahmen als ein zweites Bauteil 104 einer Baugruppe 100 ausgebildet sind. Die Baugruppe weist eine Befestigungseinheit 10 auf, welche an dem ersten Bauteil 102 ein als Innengewinde ausgebildetes Montagegewinde 36 bereitstellt. Außerdem weist die Baugruppe 100 ein als Schraube ausgebildetes Befestigungselement 106 auf. Das Befestigungselement 106 weist ein mit dem Montagegewinde 36 korrespondierendes Außengewinde 118 auf. Das erste Bauteil 102 und das zweite Bauteil 104 sind mittels der Befestigungseinheit 10 und dem Befestigungselement 106 aneinander befestigt.

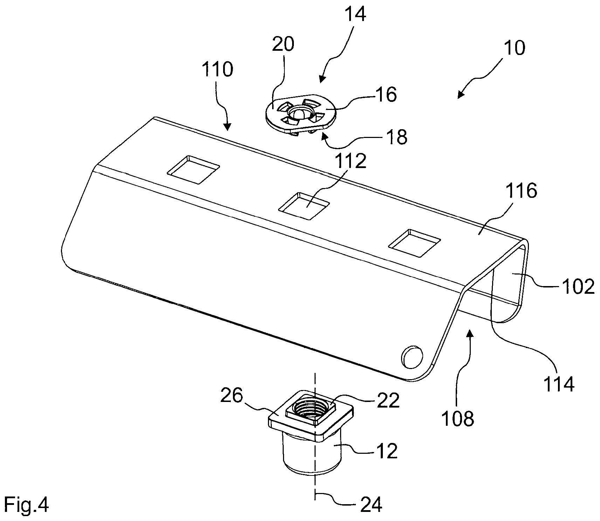

Die Fig. 4 zeigt eine Befestigungseinheit 10, welche zur Bereitstellung eines als Innengewinde ausgebildeten Montagegewindes 36 an einem dünnwandigen Bauteil 102 dient. Die Befestigungseinheit 10 umfasst einen Befestigungskörper 12 und ein Halteelement 14.

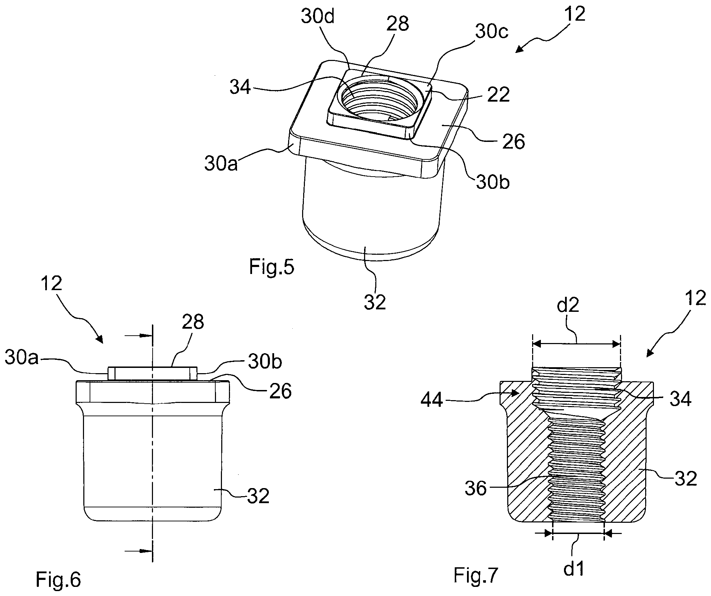

Der Befestigungskörper 12 trägt das Montagegewinde 36 und ist dazu eingerichtet, auf einer ersten Seite 108 des Bauteils 102 im Bereich einer sich durch das Bauteil 102 erstreckenden Ausnehmung 112 angeordnet zu werden. Hierzu weist der Befestigungskörper eine Kontaktfläche 26 und eine Verdrehsicherung 22 auf. Die Kontaktfläche 26 ist dazu eingerichtet, mit einer auf der ersten Seite 108 des Bauteils 102 angeordneten Kontaktfläche 114 des Bauteils 102 in Kontakt zu stehen. Die Verdrehsicherung 22 kann in die Ausnehmung 112 in dem Bauteil 102 eingesetzt werden und verhindert durch Formschluss ein Verdrehen des Befestigungskörpers 12 um seine Längsachse 24. Die Ausnehmung 112 des Bauteils 102 weist eine Innenkontur mit mehreren Ecken auf, wobei die Verdrehsicherung 22 als Materialvorsprung 28 ausgebildet ist, deren Form korrespondierende Ecken 30a-30d aufweist, welche ein verdrehsicheres Einsetzen in die Ausnehmung 112 des Bauteils 102 erlauben (siehe hierzu auch Fig. 5). Die Ausnehmung 112 des Bauteils 102 und die Verdrehsicherung 22 weisen einen im Wesentlichen quadratischen Querschnitt auf.

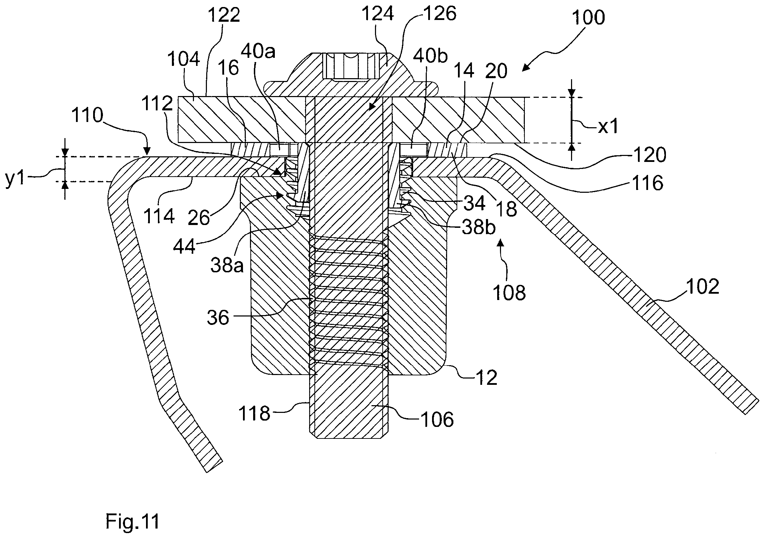

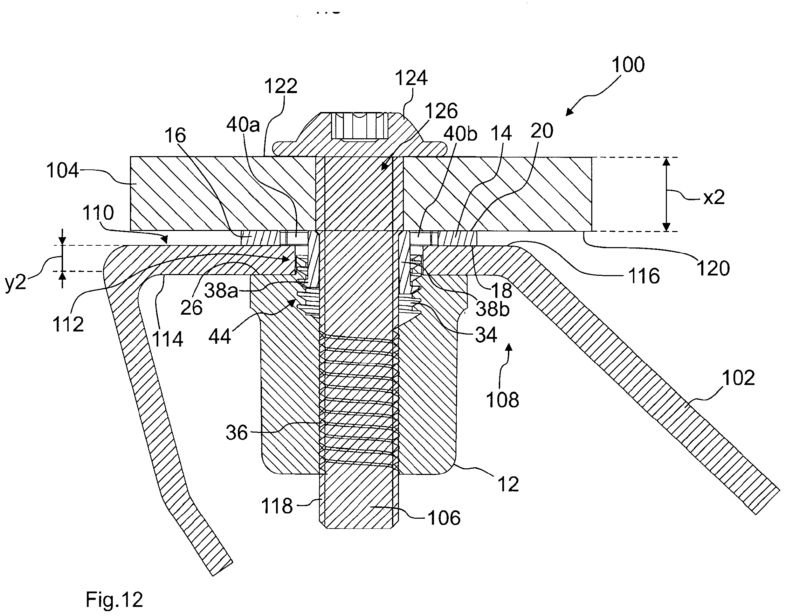

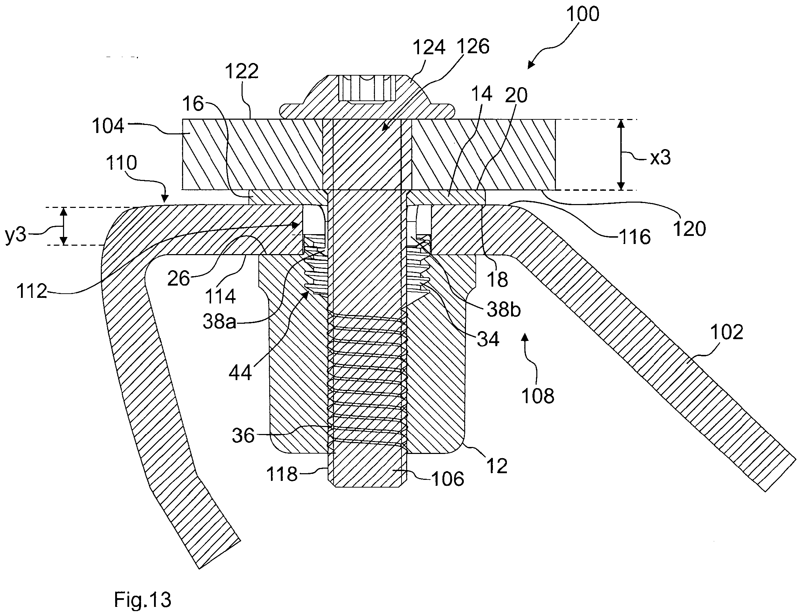

Das Halteelement 14 ist dazu eingerichtet, auf einer zweiten Seite 110 des Bauteils 102 im Bereich der sich durch das Bauteil 102 erstreckenden Ausnehmung 112 und gegenüberliegend zu dem Befestigungskörper 12 angeordnet zu werden und den Befestigungskörper 12 auf der ersten Seite 108 des Bauteils 102 zu halten. Das Halteelement 14 weist außerdem einen Kontaktabschnitt 16 auf, welcher als Unterlegscheibe und Abstandshalter zwischen dem Bauteil 102 und einem unter Verwendung der Befestigungseinheit 10 an dem Bauteil 102 zu befestigenden weiteren Bauteil 104 dient. Der Kontaktabschnitt 16 des Halteelements 14 weist eine erste Kontaktfläche 18 auf, welche dazu eingerichtet ist, mit einer auf der zweite Seite 110 des Bauteils 102 angeordneten Kontaktfläche 116 des Bauteils 102 in Kontakt zu stehen. Außerdem weist der Kontaktabschnitt 16 des Halteelements 14 eine zweite Kontaktfläche 20 auf, welche dazu eingerichtet ist, mit einer Kontaktfläche 120 des unter Verwendung der Befestigungseinheit 10 an dem Bauteil 102 zu befestigenden weiteren Bauteils 104 in Kontakt zu stehen (siehe hierzu auch die Fig. 11 bis 13). Ferner ist der Kontaktabschnitt 16 rund und scheibenförmig ausgebildet.

Durch die Befestigungseinheit 10 wird an dem Bauteil 102 ein Montagegewinde 36 bereitgestellt, welches dazu genutzt werden kann, ein weiteres Bauteil 104 an dem Bauteil 102, an welchem das Montagegewinde 36 bereitgestellt wurde, zu befestigen.

Die Fig. 5 bis 7 zeigen einen einstückigen und aus Kunststoff ausgebildeten Befestigungskörper 12, welcher ein Montagegewinde 36 trägt und dazu eingerichtet ist, auf einer ersten Seite 108 eines Bauteils 102 im Bereich einer sich durch das Bauteil 102 erstreckenden Ausnehmung 112 angeordnet zu werden. Zusätzlich zu dem Montagegewinde 36 umfasst der Befestigungskörper 12 einen von dem Montagegewinde 36 beabstandeten Halteabschnitt 44.

Der Halteabschnitt 44 des Befestigungskörpers 12 weist ein als Innengewinde ausgebildetes Fixiergewinde 34 auf. Die Flanken des Fixiergewindes 34 dienen als Rastkanten für als Rasthaken ausgebildete elastisch verformbare Stege eines Halteelements 14. Das Montagegewinde 36 und das Fixiergewinde 34 weisen unterschiedliche Durchmesser d1, d2 auf, wobei der Durchmesser d2 des Fixiergewindes 34 größer ist als der Durchmesser d1 des Montagegewindes 36. Das Montagegewinde 36 und das Fixiergewinde 34 sind in einen Grundkörper 32 des Befestigungskörpers 12 eingebracht.

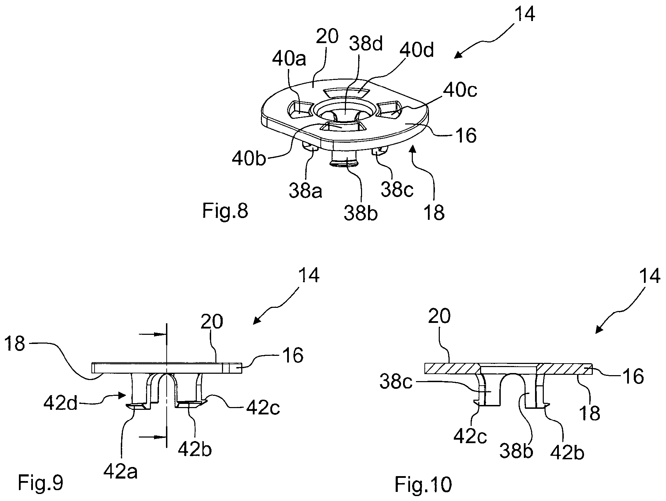

Die Fig. 8 bis 10 zeigen ein einstückiges und aus Kunststoff ausgebildetes Halteelement 14. Das Halteelement 14 ist dazu eingerichtet, auf einer zweiten Seite 110 eines Bauteils 102 im Bereich einer sich durch das Bauteil 102 erstreckenden Ausnehmung 112 und gegenüberliegend zu einem Befestigungskörper 12 angeordnet zu werden. Das Halteelement 14 wird dazu eingesetzt, den Befestigungskörper 12 auf der ersten Seite 108 des Bauteils 102 zu halten.

Das Halteelement 14 umfasst insgesamt vier Verbindungsteile 38a-38d, wobei jeweils zwei Verbindungsteile 38a-38d gegenüberliegend angeordnet sind. Die Verbindungsteile 38a-38d sind als elastisch verformbare Stege ausgebildet, wobei die elastisch verformbaren Stege zum Halten des Befestigungskörpers 12 auf der ersten Seite 108 des Bauteils 102 dazu eingerichtet sind, unter elastischer Verformung mit dem von dem Montagegewinde 36 beabstandeten Halteabschnitt 44 des Befestigungskörpers 12 verbunden zu werden.

Die als elastisch verformbare Stege ausgebildeten Verbindungsteile 38a-38d des Halteelements 14 sind reversibel lösbar sowie zerstörungsfrei und werkzeuglos mit dem Halteabschnitt 44 des Befestigungskörpers 12 verbindbar. Hierzu sind die als elastisch verformbare Stege ausgebildeten Verbindungsteile 38a-38d jeweils als Rasthaken ausgebildet, welche dazu eingerichtet sind mit dem Fixiergewinde 36 des Befestigungskörpers 12 nach Art einer Clip-Verbindung verrastet zu werden. Die als elastisch verformbare Stege ausgebildeten Verbindungsteile 38a-38d weisen jeweils einen Kontaktbereich 42a-42d auf, welcher einen Abschnitt eines mit dem Fixiergewinde 34 korrespondierenden Außengewindes trägt. Durch das Außengewinde im Kontaktbereich 42a-42d der Stege kann das Halteelement 14 nach dem Verrastungsvorgang, welcher durch die elastische Verformbarkeit der Stege ermöglicht wird, weiter eingedreht werden.

Außerdem weist das Halteelement 14 einen scheibenförmigen Kontaktabschnitt 16 auf, welcher als Unterlegscheibe dient. Ferner weist der Kontaktabschnitt 16 mehrere Ausnehmungen 40a-40d auf, wobei die Anzahl der Ausnehmungen 40a-40d des Kontaktabschnitts 16 des Halteelements 14 mit der Anzahl der Stege des Halteelements 14 übereinstimmt.

Die Fig. 11 bis 13 zeigen jeweils eine Baugruppe 100 mit einem ersten dünnwandigen Bauteil 102, einem zweiten dünnwandigen Bauteil 104, einer Befestigungseinheit 10 und einem Befestigungselement 106.

Das Befestigungselement 106 ist als Schraube ausgebildet und weist einen Schraubenkopf 124 und ein Außengewinde 118 auf. Der Schraubenkopf 124 liegt auf der Kontaktfläche 122 des zweiten Bauteils 104 auf. Das Befestigungselement 106 erstreckt sich durch eine Ausnehmung 126 in dem zweiten Bauteil 104 sowie durch eine Ausnehmung 112 in dem ersten Bauteil 102.

Die Befestigungseinheit 10 stellt an dem ersten Bauteil 102 ein als Innengewinde ausgebildetes Montagegewinde 36 bereitstellt, in welches das Außengewinde 118 des Befestigungselements 106 eingeschraubt ist, sodass das erste Bauteil 102 und das zweite Bauteil 104 mittels der Befestigungseinheit 10 und dem Befestigungselement 106 aneinander befestigt sind.

Das Befestigungselement 106 ist dazu eingerichtet, bereits vor dem Eindrehen und während des Eindrehens in das Montagegewinde 36 ein Lösen der als elastisch verformbare Stege ausgebildeten Verbindungsteile 38a-38d von dem Halteabschnitt 44 des Befestigungskörpers 12 zu verhindern. Dies wird dadurch erreicht, dass das Befestigungselement 106 bereits vor dem Eindrehen und während des Eindrehens in das Montagegewinde 36 einen Bauraum beansprucht, welchen die als elastisch verformbare Stege ausgebildeten Verbindungsteile 38a-38d benötigen würden, um sich derart zu verformen, dass der Eingriff in ein im Halteabschnitt 44 angeordnetes Fixiergewinde 34 gelöst werden kann.

Die in den Fig. 11 bis 13 dargestellten ersten Bauteile 102 und zweiten Bauteile 104 weisen jeweils unterschiedliche Blechstärken x1-x3, y1-y3 auf, wobei die eingesetzten Befestigungseinheiten 10 übereinstimmen. Die Darstellungen zeigen, dass die erfindungsgemäße Befestigungseinheit 10 aufgrund der Verwendung eines Gewindes, nämliches des Fixiergewindes 34, zur Verrastung der als Rasthaken ausgebildeten Verbindungsteile 38a-38d es erlaubt, Bauteile mit unterschiedlichen Materialstärken lackschonend aneinander zu befestigen.

Zur Ausgestaltung der Außenkontur des Befestigungskörpers 12 sei noch das folgende angemerkt:
In den bisher beschriebenen Ausführungsbeispielen ist der Befestigungskörper 12 in seinem freien Endbereich kreisförmig ausgebildet. Es ist jedoch auch möglich, die Außenkontur des Befestigungskörpers 12 mehreckig, beispielsweise viereckig oder sechseckig auszugestalten. Durch diese Ausgestaltung kann zum Beispiel ein entsprechender Steckschlüssel auf die sechseckige Außenkontur des Befestigungskörpers 12 aufgesetzt werden. So ist zum Beispiel die Montage der Befestigungseinheit 10 mit dem Befestigungskörper 12 an nicht ohne weiteres zugänglichen Stellen möglich. Somit kann die Befestigung der 10 mit dem Befestigungskörper 12 an einer Rohrwand, in welcher entsprechend ausgestaltete Durchbrüche angeordnet sind, montiert werden.

### Bezugszeichenliste

- 10: Befestigungseinheit
- 12: Befestigungskörper
- 14: Halteelement
- 16: Kontaktabschnitt
- 18: Kontaktfläche
- 20: Kontaktfläche
- 22: Verdrehsicherung
- 24: Längsachse
- 26: Kontaktfläche
- 28: Materialvorsprung
- 30a-30d: Ecken
- 32: Grundkörper
- 34: Fixiergewinde
- 36: Montagegewinde
- 38a-38d: Verbindungsteile
- 40a-40d: Ausnehmungen
- 42a-42d: Kontaktbereiche
- 44: Halteabschnitt

- 100: Baugruppe
- 102: Bauteil
- 104: Bauteil
- 106: Befestigungselement
- 108: erste Seite
- 110: zweite Seite
- 112: Ausnehmung
- 114: Kontaktfläche
- 116: Kontaktfläche
- 118: Außengewinde
- 120: Kontaktfläche
- 122: Kontaktfläche
- 124: Kopf
- 126: Ausnehmung

- 200: Verteilgerät
- 202: Vorratsbehälter
- 204a, 204b: Vorratsbereiche
- 206a, 206b: Dosierorgane
- 208a, 208b: Schleuderscheiben

- d1, d2: Gewindedurchmesser
- x1-x3: Blechstärken
- y1-y3: Blechstärken

## Patentansprüche

1. Befestigungseinheit (10) zur Bereitstellung eines als Innengewinde ausgebildeten Montagegewindes (36) an einem Bauteil (102), insbesondere an einem dünnwandigen Bauteil (102), mit
- einem Befestigungskörper (12), welcher das Montagegewinde (36) trägt und dazu eingerichtet ist, auf einer ersten Seite (108) des Bauteils (102) im Bereich einer sich durch das Bauteil (102) erstreckenden Ausnehmung (112) angeordnet zu werden; und
- einem Halteelement (14), welches dazu eingerichtet ist, auf einer zweiten Seite (110) des Bauteils (102) im Bereich der sich durch das Bauteil (102) erstreckenden Ausnehmung (112) und gegenüberliegend zu dem Befestigungskörper (12) angeordnet zu werden und den Befestigungskörper (12) auf der ersten Seite (108) des Bauteils (102) zu halten,
wobei, dass das Halteelement (14) ein oder mehrere Verbindungsteile (38a-38d) umfasst, welche zum Halten des Befestigungskörpers (12) auf der ersten Seite (108) des Bauteils (102) dazu eingerichtet sind, mit einem von dem Montagegewinde (36) beabstandeten Halteabschnitt (44) des Befestigungskörpers (12) verbunden zu werden, **dadurch gekennzeichnet, dass** ein Verbindungsteil (38a-38d) des Halteelements (14) als umlaufendes und als Außengewinde ausgebildetes Verbindungsgewinde ausgebildet ist, wobei der Halteabschnitt (44) des Befestigungskörpers (12) ein zu dem Verbindungsgewinde korrespondierendes als Innengewinde ausgebildetes Fixiergewinde (34) aufweist.

2. Befestigungseinheit (10) nach Anspruch 1,
**dadurch gekennzeichnet, dass** das eine oder die mehreren Verbindungsteile (38a-38d) des Halteelements (14) dazu eingerichtet sind, reversibel lösbar und vorzugsweise zerstörungsfrei und/oder werkzeuglos mit dem Halteabschnitt (44) des Befestigungskörpers (12) verbunden zu werden.

3. Befestigungseinheit (10) nach Anspruch 1 oder 2,
**dadurch gekennzeichnet, dass** das eine oder die mehreren Verbindungsteile (38a-38d) des Halteelements (14) dazu eingerichtet sind, zumindest formschlüssig mit dem Halteabschnitt (44) des Befestigungskörpers (12) verbunden zu werden.

4. Befestigungseinheit (10) nach einem der vorstehenden Ansprüche, **dadurch gekennzeichnet, dass** das eine oder die mehreren Verbindungsteile (38a-38d) einen oder mehrere elastisch verformbare Stege umfassen, welche zum Halten des Befestigungskörpers (12) auf der ersten Seite (108) des Bauteils (102) dazu eingerichtet sind, unter elastischer Verformung mit dem von dem Montagegewinde (36) beabstandeten Halteabschnitt (44) des Befestigungskörpers (12) verbunden zu werden.

5. Befestigungseinheit (10) nach Anspruch 4,
**dadurch gekennzeichnet, dass** der Halteabschnitt (44) des Befestigungskörpers (12) eine oder mehrere Rastkanten aufweist und der eine oder die mehreren Stege jeweils als Rasthaken ausgebildet sind, wobei die eine oder die mehreren Rastkanten und der eine oder die mehreren Rasthaken zum Halten des Befestigungskörpers (12) auf der ersten Seite (108) des Bauteils (102) dazu eingerichtet sind, miteinander verrastet zu werden.

6. Befestigungseinheit (10) nach Anspruch 5,
**dadurch gekennzeichnet, dass** der Halteabschnitt (44) des Befestigungskörpers (12) ein als Innengewinde ausgebildetes Fixiergewinde (34) aufweist und die eine oder die mehreren Rastkanten Bestandteil des Fixiergewindes (34) sind.

7. Befestigungseinheit (10) nach Anspruch 6,
**dadurch gekennzeichnet, dass** der eine oder die mehreren Stege jeweils einen Kontaktbereich (42a-42d) aufweisen, welcher einen Abschnitt eines mit dem Fixiergewinde (34) korrespondierenden Außengewindes trägt.

8. Befestigungseinheit (10) nach einem der Ansprüche 1 oder 6 bis 7, **dadurch gekennzeichnet, dass** das Montagegewinde (36) und das Fixiergewinde (34) unterschiedliche Durchmesser (d1, d2) aufweisen.

9. Befestigungseinheit (10) nach einem der vorstehenden Ansprüche, **dadurch gekennzeichnet, dass** der Befestigungskörper (12) eine Verdrehsicherung (22) aufweist, welche dazu eingerichtet ist, sich zumindest abschnittsweise durch die Ausnehmung (112) in dem Bauteil (102) zu erstrecken und durch Formschluss ein Verdrehen des Befestigungskörpers (12) um eine Längsachse (24) des Befestigungskörpers (12) zu verhindern.

10. Befestigungseinheit (10) nach einem der vorstehenden Ansprüche, **dadurch gekennzeichnet, dass** der Befestigungskörper (12) eine Kontaktfläche (26) aufweist, welche dazu eingerichtet ist, mit einer auf der ersten Seite (108) des Bauteils (102) angeordneten Kontaktfläche (114) des Bauteils (102) in Kontakt zu stehen.

11. Befestigungseinheit (10) nach einem der vorstehenden Ansprüche, **dadurch gekennzeichnet, dass** das Halteelement (14) einen Kontaktabschnitt (16) aufweist, welcher dazu eingerichtet ist, als Unterlegscheibe und/oder Abstandshalter zwischen dem Bauteil (102) und einem unter Verwendung der Befestigungseinheit (10) an dem Bauteil (102) zu befestigenden weiteren Bauteil (104) zu dienen.

12. Befestigungseinheit (10) nach Anspruch 11,
**dadurch gekennzeichnet, dass** der Kontaktabschnitt (16) des Halteelements (14) eine erste Kontaktfläche (18), welche dazu eingerichtet ist, mit einer auf der zweite Seite (110) des Bauteils (102) angeordneten Kontaktfläche (116) des Bauteils (102) in Kontakt zu stehen, und/oder eine zweite Kontaktfläche (20), welche dazu eingerichtet ist, mit einer Kontaktfläche (120) des unter Verwendung der Befestigungseinheit (10) an dem Bauteil (102) zu befestigenden weiteren Bauteils (104) in Kontakt zu stehen, aufweist.

13. Befestigungseinheit (10) nach Anspruch 11 oder 12,
**dadurch gekennzeichnet, dass** der Kontaktabschnitt (16) rund und/oder scheibenförmig ausgebildet ist und/oder ein oder mehrere Ausnehmungen (40a-40d) aufweist.

14. Befestigungseinheit (10) nach einem der vorstehenden Ansprüche, **dadurch gekennzeichnet, dass** der Befestigungskörper (12) und/oder das Halteelement (14) jeweils einstückig ausgebildet sind.

15. Befestigungseinheit (10) nach einem der vorstehenden Ansprüche, **dadurch gekennzeichnet, dass** der Befestigungskörper (12) und/oder das Halteelement (14) jeweils teilweise oder vollständig aus Kunststoff, insbesondere aus faserverstärktem Kunststoff, ausgebildet sind.

16. Baugruppe (100), mit
- einem ersten Bauteil (102);
- einem zweiten Bauteil (104);
- einer Befestigungseinheit (10), welche an dem ersten Bauteil (102) ein als Innengewinde ausgebildetes Montagegewinde (36) bereitstellt; und
- einem Befestigungselement (106), welches ein mit dem Montagegewinde (36) korrespondierendes Außengewinde (118) aufweist;
wobei das erste Bauteil (102) und das zweite Bauteil (104) mittels der Befestigungseinheit (10) und dem Befestigungselement (106) aneinander befestigt sind,
**dadurch gekennzeichnet, dass** die Befestigungseinheit (10) nach einem der vorstehenden Ansprüche ausgebildet ist.

17. Baugruppe (100) nach Anspruch 16,
**dadurch gekennzeichnet, dass** das Befestigungselement (106) dazu eingerichtet ist, bereits vor dem Eindrehen und/oder während des Eindrehens in das Montagegewinde (36) ein Lösen des einen oder der mehreren Verbindungsteile (38a-38d) von dem Halteabschnitt (44) des Befestigungskörpers (12) zu verhindern.

## Claims

1. Fixing unit (10) for providing a mounting thread (36), designed as an internal thread, on a component (102) - in particular, on a thin-walled component (102) - having
- a fixing body (12), which bears the mounting thread (36) and is designed to be arranged on a first side (108) of the component (102) in the region of a cut-out (112) extending through the component (102); and
- a holding element (14), which is designed to be arranged on a second side (110) of the component (102) in the region of the cut-out (112), extending through the component (102), and opposite the fixing body (12), and to hold the fixing body (12) on the first side (108) of the component (102),
wherein, that the holding element (14) comprises one or more connecting parts (38a-38d), which are designed to hold the fixing body (12) on the first side (108) of the component (102) in order to be connected to a holding portion (44), spaced apart from the mounting thread (36), of the fixing body (12), **characterized in that** a connecting part (38a-38d) of the holding element (14) is designed as a circumferential connection thread which is designed as an external thread, wherein the holding portion (44) of the fixing body (12) has a fixing thread (34), which corresponds to the connection thread and is designed as an internal thread.

2. Fixing unit (10) according to claim 1,
**characterized in that** the one or more connecting parts (38a-38d) of the holding element (14) are designed to be connected to the holding portion (44) of the fixing body (12) in a reversibly detachable and preferably non-destructive manner and/or without tools.

3. Fixing unit (10) according to claim 1 or 2,
**characterized in that** the one or more connecting parts (38a-38d) of the holding element (14) are designed to be connected to the holding portion (44) of the fixing body (12) at least in a form-fitting manner.

4. Fixing unit (10) according to one of the preceding claims,
**characterized in that** the one or more connecting parts (38a-38d) comprise one or more elastically deformable webs, which are designed to hold the fixing body (12) on the first side (108) of the component (102) in order to be connected, with elastic deformation, to the holding portion (44), spaced apart from the mounting thread (36), of the fixing body (12).

5. Fixing unit (10) according to claim 4,
**characterized in that** the holding portion (44) of the fixing body (12) has one or more latching edges, and the one or more webs are each designed as latching hooks, wherein the one or more latching edges and the one or more latching hooks for holding the fixing body (12) on the first side (108) of the component (102) are designed to be latched to one another.

6. Fixing unit (10) according to claim 5,
**characterized in that** the holding portion (44) of the fixing body (12) has a fixing thread (34) designed as an internal thread, and the one or more latching edges are part of the fixing thread (34).

7. Fixing unit (10) according to claim 6,
**characterized in that** the one or more webs each have a contact region (42a-42d), which bears a portion of an external thread corresponding to the fixing thread (34).

8. Fixing unit (10) according to one of claims 1 or 6 through 7,
**characterized in that** the mounting thread (36) and the fixing thread (34) have different diameters (d1, d2).

9. Fixing unit (10) according to one of the preceding claims,
**characterized in that** the fixing body (12) has an anti-rotation lock (22), which is designed to extend at least in sections through the cut-out (112) in the component (102) and to prevent rotation of the fixing body (12) about a longitudinal axis (24) of the fixing body (12) by means of a form fit.

10. Fixing unit (10) according to one of the preceding claims,
**characterized in that** the fixing body (12) has a contact surface (26) which is designed to be in contact with a contact surface (114) of the component (102) arranged on the first side (108) of the component (102).

11. Fixing unit (10) according to one of the preceding claims,
**characterized in that** the holding element (14) has a contact portion (16), which is designed to be used as a washer and/or spacer between the component (102) and a further component (104) to be fixed to the component (102) using the fixing unit (10).

12. Fixing unit (10) according to claim 11,
**characterized in that** the contact portion (16) of the holding element (14) has a first contact surface (18), which is designed to be in contact with a contact surface (116) of the component (102) arranged on the second side (110) of the component (102), and/or a second contact surface (20), which is designed to be in contact with a contact surface (120) of the further component (104) to be fixed to the component (102) using the fixing unit (10).

13. Fixing unit (10) according to claim 11 or 12,
**characterized in that** the contact portion (16) is round and/or disk-shaped and/or has one or more cut-outs (40a-40d).

14. Fixing unit (10) according to one of the preceding claims,
**characterized in that** the fixing body (12) and/or the holding element (14) are each formed in one piece.

15. Fixing unit (10) according to one of the preceding claims,
**characterized in that** the fixing body (12) and/or the holding element (14) are each partially or completely made of plastic, and in particular of fiber-reinforced plastic.

16. Assembly (100), having
- a first component (102);
- a second component (104);
- a fixing unit (10), which, on the first component (102), provides a mounting thread (36) designed as an internal thread; and
- a fixing element (106), which has an external thread (118) corresponding to the mounting thread (36);
wherein the first component (102) and the second component (104) are fixed to one another by means of the fixing unit (10) and the fixing element (106),
**characterized in that** the fixing unit (10) is designed according to one of the preceding claims.

17. Assembly (100) according to claim 16,
**characterized in that** the fixing element (106) is designed to prevent the one or more connecting parts (38a-38d) from being detached from the holding portion (44) of the fixing body (12) even before and/or during the screwing into the mounting thread (36).

## Revendications

1. Unité de fixation (10) destinée à fournir d'un filetage de montage (36) réalisé sous la forme d'un filetage intérieur sur un composant (102), en particulier sur un composant à paroi mince (102), comprenant
- un corps de fixation (12), lequel porte le filetage de montage (36) et est adapté pour être disposé sur un premier côté (108) du composant (102) dans la région d'un évidemment (112) traversant le composant (102) ; et
- un élément de maintien (14), lequel est adapté pour être disposé sur un deuxième côté (110) du composant (102) dans la région de l'évidement (112) s'étendant à travers le composant (102) et opposé au corps de fixation (12) et pour maintenir le corps de fixation (12) sur le premier côté (108) du composant (102),
l'élément de maintien (14) comprenant une ou plusieurs parties de raccordement (38a-38d), lesquelles, pour maintenir le corps de fixation (12) sur le premier côté (108) du composant (102), sont adaptées pour être raccordées à une section de maintien (44) du corps de fixation (12) espacée du filetage de montage (36), **caractérisée en ce qu'une** partie de raccordement (38a-38d) de l'élément de maintien (14) est réalisée sous la forme d'un filetage de raccordement périphérique et d'un filetage extérieur, la section de maintien (44) du corps de fixation (12) présentant un filetage de fixation (34) formé comme un filetage intérieur correspondant au filetage de raccordement.

2. Unité de fixation (10) selon la revendication 1,
**caractérisée en ce que** l'une ou les plusieurs parties de raccordement (38a-38d) de l'élément de maintien (14) sont adaptées pour être raccordées de manière amovible et détachable et de préférence de manière non destructive et/ou sans outils à la section de maintien (44) du corps de fixation (12).

3. Unité de fixation (10) selon la revendication 1 ou 2,
**caractérisée en ce que** l'une ou les plusieurs parties de raccordement (38a-38d) de l'élément de maintien (14) sont conçues pour être raccordées par complémentarité de forme à la section de maintien (44) du corps de fixation (12).

4. Unité de fixation (10) selon l'une quelconque des revendications précédentes,
**caractérisée en ce que** l'une ou les plusieurs parties de raccordement (38a-38d) comprennent une ou plusieurs traverses plastiquement déformables, lesquelles, pour le maintien du corps de fixation (12) sur le premier côté (108) du composant (102), sont conçues pour être raccordées par déformation élastique à la section de maintien (44) du corps de fixation (12) espacée du filetage de montage (36).

5. Unité de fixation (10) selon la revendication 4,
**caractérisée en ce que** la section de maintien (44) du corps de fixation (12) présente une ou plusieurs arêtes d'encliquetage et **en ce que** l'une ou les plusieurs traverses sont réalisées respectivement sous la forme de crochets d'encliquetage, l'une ou les plusieurs arêtes d'encliquetage et l'un ou les plusieurs crochets d'encliquetage étant adaptés pour s'encliqueter les uns avec les autres pour maintenir e corps de fixation (12) sur le premier côté (108) du composant (102).

6. Unité de fixation (10) selon la revendication 5,
**caractérisée en ce que** la section de maintien (44) du corps de fixation (12) présente un filetage de fixation (34) réalisé sous la forme d'un filetage intérieur et **en ce que** l'une ou les plusieurs arêtes d'encliquetage font partie du filetage de fixation (34).

7. Unité de fixation (10) selon la revendication 6,
**caractérisée en ce que** l'une ou les plusieurs traverses présentent respectivement une région de contact (42a-42d), laquelle porte une section d'un filetage externe correspondant au filetage de fixation (34).

8. Unité de fixation (10) selon l'une quelconque des revendications 1 ou 6 à 7,
**caractérisée en ce que** le filetage de montage (36) et le filetage de fixation (34) présentent des diamètres différents (d1, d2).

9. Unité de fixation (10) selon l'une quelconque des revendications précédentes,
**caractérisée en ce que** le corps de fixation (12) présente un dispositif anti-rotation (22), lequel est adapté pour s'étendre au moins par sections à travers l'évidement (112) dans le composant (102) et pour empêcher, par complémentarité de forme une rotation du corps de fixation (12) autour d'un axe longitudinal (24) du corps de fixation (12).

10. Unité de fixation (10) selon l'une quelconque des revendications précédentes,
**caractérisée en ce que** le corps de fixation (12) présente une surface de contact (26), laquelle est adaptée pour être en contact avec une surface de contact (114) du composant (102) disposée sur le premier côté (108) du composant (102).

11. Unité de fixation (10) selon l'une quelconque des revendications précédentes,
**caractérisée en ce que** l'élément de maintien (14) présente une section de contact (16), laquelle est adaptée pour servir de rondelle et/ou d'entretoise entre le composant (102) et un autre composant (104) devant être fixé au composant (102) en utilisant l'unité de fixation (10).

12. Unité de fixation (10) selon la revendication 11,
**caractérisée en ce que** la section de contact (16) de l'élément de maintien (14) présente une première surface de contact (18), laquelle est adaptée pour être en contact avec une surface de contact (116) du composant (102) disposée sur le deuxième côté (110) du composant (102), et/ou une deuxième surface de contact (20), laquelle est adaptée pour être en contact avec une surface de contact (120) de l'autre composant (104) devant être fixé au composant (102) en utilisant l'unité de fixation (10).

13. Unité de fixation (10) selon la revendication 11 ou 12,
**caractérisée en ce que** la section de contact (16) est réalisée en forme ronde et/ou de disque et/ou **en ce qu'**elle présente une ou plusieurs cavités (40a-40d).

14. Unité de fixation (10) selon l'une quelconque des revendications précédentes,
**caractérisée en ce que** le corps de fixation (12) et/ou l'élément de maintien (14) sont réalisés respectivement d'une pièce.

15. Unité de fixation (10) selon l'une quelconque des revendications précédentes,
**caractérisée en ce que** le corps de fixation (12) et/ou l'élément de maintien (14) sont réalisés respectivement en partie ou dans leur totalité en plastique, en particulier en plastique renforcé par des fibres.

16. Assemblage (100), comprenant
- un premier composant (102) ;
- un deuxième composant (104) ;
- une unité de fixation (10), laquelle fournie un filetage de montage (36) réalisé sous la forme d'un filetage intérieur sur le premier composant (102); et
- un élément de fixation (106), lequel présente un filetage externe (118) correspondant au filetage de montage (36) ;
le premier composant (102) et le deuxième composant (104) étant fixés l'un à l'autre au moyen de l'unité de fixation (10) et de l'élément de fixation (106),
**caractérisé en ce que** l'unité de fixation (10) est réalisée selon l'une quelconque des revendications précédentes.

17. Assemblage (100) selon la revendication 16,
**caractérisé en ce que** l'élément de fixation (106) est conçu pour empêcher, déjà avant le vissage et/ou pendant le vissage dans le filetage de montage (36), un détachement de l'une ou des plusieurs parties de raccordement (38a-38d) de la section de support (44) du corps de fixation (12).
